# EUROPEAN PATENT APPLICATION

(11) **EP 4 462 340 A1**
(43) Date of publication of application: **13.11.2024**
(21) Application number: 23752342.8
(22) Date of filing: 07.02.2023
(51) Int. Cl.: G06Q 30/06, G06Q 20/32, G06Q 20/38, G06Q 20/22, G06Q 30/0601, G06Q 20/20, G06Q 20/28

(54) **PAYMENT PAGE DISPLAY METHOD AND APPARATUS, READABLE MEDIUM AND ELECTRONIC DEVICE**

(30) Priority: 08.02.2022 CN 202210119269
(71) Applicant: BEIJING YOUZHUJU NETWORK TECHNOLOGY CO. LTD., Beijing 101299 (CN)
(72) Inventor: YANG, Jie, Beijing 100086 (CN); XIN, Sijie, Beijing 100086 (CN); WU, Hezhou, Beijing 100086 (CN)
(74) Representative: Dentons UK and Middle East LLP
(86) International application number: PCT/CN2023/074840
(87) International publication number: WO 2023/151562

(57) **Abstract**

This disclosure relates to method, apparatus, readable medium, electronic device, a computer program product, and a computer program for displaying a payment page, and relates to the technical field of terminal devices. The method comprises: acquiring current order information in response to an order submission operation triggered by a user; determining at least one target display component from a plurality of display components based on the order information; and displaying the target display component in the payment page to display payment information corresponding to the order information through the target display component. Therefore, at least one corresponding target display component may be determined based on the contents of different order information, thereby displaying a payment page containing the target display component corresponding to current order information, assisting a user in payment, and improving the usage experience of the user. Furthermore, with the above method, various kinds of payment pages may be displayed according to different order information, so as to better satisfying the diversified requirements.

## Description

### CROSS REFERENCE TO RELATED APPLICATIONS

This disclosure claims priority to Chinese Patent Application No. 202210119269.6, filed on February 8, 2022, and entitled "PAYMENT PAGE DISPLAY METHOD AND APPARATUS, READABLE MEDIUM, AND ELECTRONIC DEVICE", which is incorporated herein by reference in its entirety.

### FIELD

The present disclosure relates to the technical field of terminal devices, and in particular, to a method, an apparatus, a readable medium, an electronic device, a computer program product and a computer program for displaying a payment page.

### BACKGROUND

With the continuous development of terminal devices, more and more functions capable of facilitating people's lives may be implemented on the terminal devices, for example, a navigation function, game software, mobile payment, and the like, all facilitating people's lives to a great extent. In particular, mobile payment extends shopping and payment modes of people, and brings new experience to people.

At present, in a payment page, a user may only see a payment amount and a payment mode, and determine whether to pay the order according to the payment amount and other information in impression. It can be seen that, in the current payment links, the style of the payment page viewed by the user is simple, which has the problem of poor user experience.

### SUMMARY

This Summary is provided to introduce the concepts in a simplified form that are further described below in the Detailed Description. This Summary is not intended to identify key features or essential features of the claimed subject matter, nor is it intended to be used to limit the scope of the claimed subject matter.

According to a first aspect, the present disclosure provides a method for displaying a payment page, wherein the method comprises: acquiring current order information in response to an order submission operation triggered by a user; determining at least one target display component from a plurality of display components based on the order information; and displaying the target display component in the payment page to display payment information corresponding to the order information through the target display component.

According to a second aspect, the present disclosure provides an apparatus for displaying a payment page, wherein the apparatus comprises: an information acquisition module, configured to acquire current order information in response to an order submission operation triggered by a user; a target determination module, configured to determine at least one target display component from a plurality of display components based on the order information; and a display module, configured to display the target display component in the payment page to display payment information corresponding to the order information through the target display component.

According to a third aspect, the present disclosure provides a computer readable medium having a computer program stored thereon, wherein the program, when executed by a processing apparatus, carries out steps of the method for displaying a payment page of the first aspect.

According to a fourth aspect, the present disclosure provides an electronic device, comprising: a memory apparatus having a computer program stored thereon; and a processing apparatus configured to execute the computer program in the memory apparatus, to carry out steps of the method for displaying a payment page of the first aspect.

According to a fifth aspect, the present disclosure provides a computer program product, comprising a computer program, which when executed by a processor, performs steps of the method for displaying a payment page of the first aspect.

According to a sixth aspect, the present disclosure provides a computer program, wherein the computer program, when executed by a processor, carries out steps of the method for displaying a payment page of the first aspect.

Additional features and advantages of the disclosure will be set forth in the detailed description which follows.

### BRIEF DESCRIPTION OF THE DRAWINGS

The above and other features, advantages, and aspects of various embodiments of the present disclosure will become more apparent with reference to the following detailed description taken in conjunction with the accompanying drawings. The same or like reference numerals represent the same or like elements throughout the drawings, it being understood that the drawings are illustrative and that the elements and primaries are not necessarily drawn to scale. In the drawings:
FIG. 1 is a flowchart of a method for displaying a payment page according to an example embodiment;
FIG. 2 is a schematic diagram of a payment page provided according to an example embodiment;
FIG. 3 is a schematic diagram of another payment page provided according to an example embodiment;
FIG. 4 is a schematic diagram of another payment page provided according to an example embodiment;
FIG. 5 is a schematic diagram of another payment page provided according to an example embodiment;
FIG. 6 is a schematic diagram of another payment page provided according to an example embodiment;
FIG. 7 is a flowchart of another method for displaying a payment page according to an example embodiment;
FIG. 8 is a flowchart of another method for displaying a payment page according to an example embodiment;
FIG. 9 is a schematic diagram of another payment page provided according to an example embodiment;
FIG. 10 is a flowchart of another method for displaying a payment page according to an example embodiment;
FIG. 11 is a flowchart of another method for displaying a payment page according to an example embodiment;
FIG. 12 is a flowchart of another method for displaying a payment page according to an example embodiment;
FIG. 13 is a structural diagram of a device for displaying a payment page according to an example embodiment;
FIG. 14 is a structural diagram of another apparatus for displaying a payment page according to an example embodiment;
FIG. 15 is a structural diagram of another apparatus for displaying a payment page according to an example embodiment;
FIG. 16 is a structural diagram of another apparatus for displaying a payment page according to an example embodiment;
FIG. 17 is a structural diagram of another apparatus for displaying a payment page according to an example embodiment;
FIG. 18 is a structural diagram of another display apparatus for a payment page according to an example embodiment; and
FIG. 19 is a block diagram of an electronic device provided according to an example embodiment.

### DETAILED DESCRIPTION

Embodiments of the present disclosure will be described in more detail below with reference to the accompanying drawings. Although certain embodiments of the present disclosure are shown in the drawings, it should be understood that the present disclosure may be implemented in various forms and should not be construed as being limited to the embodiments set forth herein, but rather these embodiments are provided for a thorough and complete understanding of the present disclosure. It should be understood that the drawings and embodiments of the present disclosure are only for illustrative purposes and are not intended to limit the scope of the present disclosure.

It should be understood that, the steps recorded in the method embodiments of the present disclosure may be executed in different orders, and/or executed in parallel. Furthermore, method embodiments may include additional steps and/or omit the steps illustrated performing. The scope of the present disclosure is not limited in this respect.

The term "comprising" and variations thereof, as used herein, is inclusive, i.e., "comprising but not limited to". The term "based on" means "based at least in part on". The term "one embodiment" means "at least one embodiment"; the term "another embodiment" means "at least one another embodiment"; and the term "some embodiments" means "at least some embodiments". Relevant definitions of other terms will be given in the following description.

It should be noted that, the term "first", "second" mentioned in the present disclosure are only used to distinguish different apparatuses, modules, or units, but are not used to limit the sequence or dependency of functions performed by these apparatuses, modules, or units.

It should be noted that the modifications of "one" or "more" mentioned in the present disclosure are illustrative rather than restrictive, and those skilled in the art should understand that they should be understood as "one or more" unless the context clearly indicates otherwise.

The names of messages or information interacted between a plurality of devices in the embodiments of the present disclosure are only for illustrative purposes, and are not intended to limit the scope of these messages or information.

The present disclosure will be described below with reference to specific embodiments.

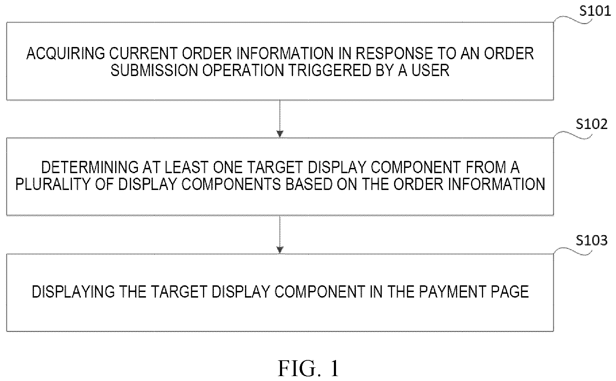

FIG. 1 is a flowchart of a method for displaying a payment page according to an example embodiment. As shown in FIG. 1, the method may include the following steps:
Step S101: acquiring current order information in response to an order submission operation triggered by a user.

The current order information may comprise commodity information expected to be purchased by the user. For example, the order information may comprise a commodity A, a commodity B, a price of the commodity A, a price of the commodity B, the quantity of the commodity A, the quantity of the commodity B, a specification of the commodity A, a specification of the commodity B, and a total price of the commodity, and may further comprise a revenue expected to be achieved after payment. If the commodity is a real commodity, the order information may further include, for example, the information of shipping address of the commodity. The current order information may only include an amount to be paid, for example, the order information may be an amount XXX paid by a user to a third party by actively scanning a two-dimensional code, where the payment amount XXX is content of the order information.

Step S102: determining at least one target display component from a plurality of display components based on the order information.

The plurality of display components may comprise, for example, a payment mode component, a target information component, a time component, a payment offer component, and a payment amount component, wherein the time component may be used for displaying information about payment time limit of an order. In addition, the at least one target display component may comprise a payment mode component. That is, the payment page comprises at least a payment mode component, thereby guaranteeing the normal payment requirements of the user. In some embodiments, it may be determined, according to the order information, whether the order information includes information corresponding to a display component, and the display component corresponding to the information included in the order information is used as a target display component.

For example, based on the order information, a target display component may be determined from a plurality of display components by a predetermined component correspondence, wherein the predetermined component correspondence comprises a correspondence between at least one order information and the display components. The order information may comprise: the order containing target information, the order having a payment time limit, the order satisfying a payment offer, the order comprising a payment amount, and so on.

In practical applications, the order information may contain a lot of information. In consideration of usage requirements of a user in a payment process, a target display component may be determined according to whether a personal requirement of the user is combined. Therefore, in this embodiment, a predetermined component correspondence may be obtained according to the following two possible implementations:
In a possible implementation, the predetermine component correspondence includes one or more of the following relationships:
Relationship 1: in response to the order information comprising target information, the at least one target display component comprises a target information component.

The target information may be commodity information in an order, and a commodity in the commodity information may be a real commodity or a virtual commodity. When the commodity is a real commodity, the target information may be, for example, a name, a quantity, a specification, and a price of the commodity. When the commodity is a virtual commodity, the target information may be, for example, the name and quantity of the virtual commodity, and the virtual commodity may be, for example, a virtual item such as a game coin. For example, when the target information is "game coin", the target information component may be used for displaying "game coin: XXX", that is, the target information component may display the name and the quantity of commodity in the target information. In addition, the target information may also be additional revenue expected after payment or an expected target after payment, and the target may be a target expected to be achieved after commodities or services are purchased. For example, the target information may be an expected credit revenue after payment, and the target information component may display "expected cumulative credit: XXX", that is, the target information component displays an expected additional credit after payment. For another example, if the target information included in the order information is a purchase playing amount, the target information component display "expected promotion playing amount: XXX", that is, the target information component displays a target expected to be achieved after purchasing a commodity or service.

Relationship 2: in response to the order information having a payment time limit, the at least one target display component comprises a time component.

The order information having a payment time limit means that the order has a payment time requirement. That is, the order needs to be paid within a predetermined time. Therefore, at least one target display component may comprise a time component, and the time component may be used for displaying the information about payment limit, i.e., the current remaining payment time of the order.

Relationship 3: in response to the order information satisfying a payment offer, the at least one target display component comprises a payment offer component.

The order information satisfying a payment offer means that there is a reduced amount in the order. Therefore, at least one target display component may comprise a payment offer component. The payment offer component may be used to display the actual offer amount in the order.

Relationship 4: in response to the order information comprising a payment amount, the at least one target display component comprises a payment amount component.

The payment amount represents the total payment amount of the order, and the payment amount component may be used for displaying the total payment amount in order information.

It should be noted that, the foregoing example is only an example description of a predetermined component correspondence. In a practical application, any of the above predetermined component correspondence may be combined based on different order information to obtain a target display component corresponding to the order information. As an example, if the order information includes a payment offer and a payment amount, and the at least one target display component includes a payment mode component, it may be determined, based on the above predetermined component correspondence, that the at least one target display component corresponding to the order information is the payment mode component, the payment offer component, and the payment amount component. In addition, the predetermine component correspondence may also include other component correspondence, that is, the corresponding target display component may be determined according to the content of the order information.

In another possible implementation, the predetermined component correspondence includes one or more of the following relationships:
Relationship 1: in response to the order information comprising target information and conforming to a display condition of target information, the at least one target display component corresponding to the order information comprises a target information component; in response to the order information comprising the target information but not confirming to the display condition of target information, the at least one target display component corresponding to the order information does not comprise the target information component.

The display condition of target information may be a predetermined condition for displaying the target information component, and may be set by a user or by a platform. For example, the target information display component is set being not displayed in advance; or the priority of each component among the plurality of display components and the number of target display components to be displayed are predetermined, and whether to display the target display component is determined according to the number of target display components and the priority of the target display components; or, requirements for other information of the order are set in advance, and it is also necessary to determine whether to display the target display component according to whether the other information of the order satisfies a condition.

For example, if the display condition of target information is set by the user in advance, and the user set the target display component as not being displayed, that is, the target information component does not conform to a display condition of target information, the at least one target display component does not comprise the target information component. For another example, if the display condition of target information is set as that the number of included target display components is 3, and the priorities of the payment mode component, the payment amount component and the payment offer component are higher than the priority of the target information component, when the display component to be selected, which is preliminarily determined based on the order information, comprises a payment mode component, a payment amount component, a payment offer component and a target information component, three target display components are determined therefrom based on the display condition of target information, i.e., the target display components finally displayed are a payment mode component, a payment amount component and a payment offer component. The preliminary determination of the display component to be selected according to the order information may be determined according to the first possible implementation, details are not described herein again. That is, in this example, the target information component does not conform to the display condition of target information, then the finally displayed target display component does not comprise the target information component. For another example, if the order information contains information about a play amount expected to be increased after purchasing a commodity, the display condition of target information may be predetermined as that the target information component is displayed when the expected promotion playing amount is larger than the predetermined number. When the display component to be selected, which is preliminarily determined based on the order information, comprises a payment mode component and a target information component, and the play amount of the purchase in order information is less than a predetermined number, according to the above display condition of target information, it can be seen that the target information component does not conform to the display condition of target information. That is, the finally displayed target display component comprises a payment mode component.

Relationship 2: in response to the order information having a payment time limit and conforming to a display condition of payment time limit, the at least one target display component comprises a time component, the time component being configured to display information about the payment time limit; in response to the order information having the payment time limit but not conforming to the display condition of payment time, the at least one target display component does not comprise the time component.

Likewise, the display condition of payment time limit may be a predetermined condition for displaying the time component, and may be set by a user or a platform. For example, the time component is set being not displayed in advance; or the priority of each component among the plurality of display components and the number of target display components to be displayed are predetermined, and whether to display the target display component is determined according to the number of target display components and the priority of the target display components; or, requirements for other information of the order are set in advance, and it is also necessary to determine whether to display the target display component according to whether the other information of the order satisfies a condition.

For example, if the display condition of payment time limit is set by the user in advance, when the use sets the time component as being displayed, that is, the time component conform to a display condition of payment time limit, the at least one target display component comprises the time component. For another example, if the display condition of payment time limit is set as that the number of included target display components is 3, and the priorities of the payment mode component, the payment amount component and the time component are higher than the priority of the payment offer component, when the display component to be selected, which is preliminarily determined based on the order information, comprises a payment amount component, a payment mode component, a time component and a payment offer component, three target display components are determined therefrom based on the display condition of payment time limit are a payment amount component, a payment mode component and a time component. That is, the time component conforms to the display condition of payment time limit, then the target display component comprises the time component.

Relationship 3: in response to the order information satisfying a payment offer and conforming to a display condition of payment offer, the at least one target display component comprises a payment offer component; in response to the order information satisfying the payment offer but not conforming to the display condition of payment offer, the at least one target display component does not comprise the payment offer component.

Likewise, the display condition of payment offer may be a predetermined condition for displaying the payment offer component, and may be set by a user or a platform. For example, the payment offer component is set being not displayed in advance; or the priority of each component among the plurality of display components and the number of target display components to be displayed are predetermined, and whether to display the target display component is determined according to the number of target display components and the priority of the target display components; or, requirements for other information of the order are set in advance, and it is also necessary to determine whether to display the target display component according to whether the other information of the order satisfies a condition.

For example, if the display condition of payment offer is set by the user in advance, when the use sets the payment offer component as being displayed, that is, the payment offer component does not conform to a display condition of payment offer, the at least one target display component does not comprise the payment offer component. For another example, if the display condition of payment offer is predetermined as that the payment offer component is displayed when the payment offer amount is larger than predetermined amount. When the display component to be selected, which is preliminarily determined based on the order information, comprises a payment mode component, a payment amount component and a payment offer component, and the payment offer amount is less than the determined offer amount, it can be seen from the display condition of above payment offer that the payment offer component does not conform to the display condition of payment offer, i.e., the target display components finally displayed does not comprise the payment offer component. In this way, when the offer is large, that is, the offer amount is greater than the predetermined offer amount, the offer amount is displayed to the user, and the user is assisted in completing payment, thereby indirectly improving the success rate of payment.

Relationship 4: in response to the order information comprising a payment amount and conforming to a display condition of payment amount, the at least one target display component comprises a payment amount component; and in response to the order information comprising the payment amount but not conforming to the display condition of payment amount, the at least one target display component does not comprise the payment amount component.

Likewise, the display condition of payment amount may be a predetermined condition for displaying the payment amount component, and may be set by a user or a platform. For example, the payment amount component is set being not displayed in advance; or the priority of each component among the plurality of display components and the number of target display components to be displayed are predetermined, and whether to display the target display component is determined according to the number of target display components and the priority of the target display components; or, requirements for other information of the order are set in advance, and it is also necessary to determine whether to display the target display component according to whether the other information of the order satisfies a condition.

For example, if the display condition of payment amount is set by the user in advance, when the use sets the payment amount component as being displayed, that is, the payment amount component conform to a display condition of payment amount, the at least one target display component comprises the payment amount component. For another example, if the display condition of payment amount is predetermined as that the payment amount component is displayed when the payment amount is larger than predetermined payment amount. When the display component to be selected, which is preliminarily determined based on the order information, comprises a payment mode component and a payment amount component, and the payment amount is larger than the determined payment amount, it can be seen from the display condition of above payment amount that the payment amount component conforms to the display condition of payment amount, i.e., the target display components finally displayed are the payment mode component and payment amount component. That is, the finally displayed target component comprises a payment amount component. In this way, when the payment amount is too large, in other words, the payment amount is greater than the predetermined payment amount, the payment amount is displayed to the user. Therefore, t is convenient for the user to determine order payment information when a large amount of payment order is generated. In this way, it assists the user in completing payment, ensures the payment security of the user, and avoids the problem of poor payment experience for the user due to a large amount of payment orders generated by a misoperation.

That is to say, in this implementation, it may be determined, according to a display condition of each display component, whether the display component is a target display component. The display condition of each display component may, for example, set a priority for each component in the plurality of display components in advance, and then determine at least one target display component from the plurality of display components according to the predetermined number of target display components and the priority of each display component. Alternatively, the display component may be set whether to be displayed in advance, and it may be set by a user or a platform, so that at least one target display component is determined from the plurality of display components. Alternatively, in the case that requirements for other information of the order are predetermined, the target display component may be determined whether to be displayed according to whether the other order information satisfies a condition. It should be noted that, in a case that the number of display components to be displayed initially determined according to order information is plural, it may be comprehensively determined the target display component to be finally displayed according to a display condition of each display component. In addition, the display condition of each display component may further include, for example, one or more display conditions of each display component in the foregoing example, that is, when the display condition includes a plurality of conditions, the display component may be displayed when each condition is satisfied.

Step S103, displaying the target display component in the payment page.

In this way, the payment information corresponding to the order information is displayed through the target display component, and the payment information is used for reflecting content to be paid in the order information.

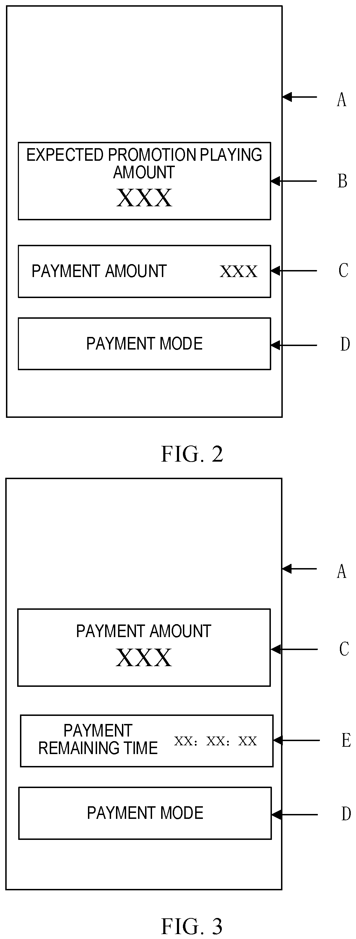

For example, as shown in FIG. 2, if the target display components obtained according to the above step S102 comprise a payment mode component, a payment amount component and a target information component, a payment page comprising the target display components may be displayed. A in FIG. 2 represents a payment page, and the payment page comprises three display components; B in FIG. 2 represents a target information component, and the target information component displays a expected promotion playing amount (namely, "expected promotion playing amount" in the figure) and the number of the expected promotion playing amount (namely, "XXX" in the figure) after purchasing a commodity in the target information; C in FIG. 2 represents a payment amount component; and D in FIG. 2 represents a payment mode component.

For example, as shown in FIG. 3, if the target display components obtained according to the above step S102 comprise a payment mode component, a time component and a payment amount component, a payment page comprising the target display components may be displayed. A in FIG. 3 represents a payment page, and the payment page comprises three display components; C in FIG. 3 represents a payment amount component; D in FIG. 3 represents a payment mode component; and E in FIG. 3 represents a time component.

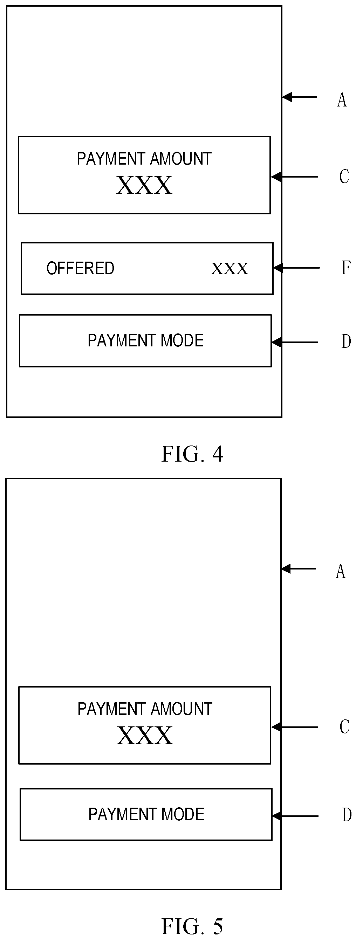

For example, as shown in FIG. 4, if the target display components obtained according to the above step S102 comprise a payment mode component, a payment offer component and a payment amount component, a payment page comprising the target display components may be displayed. In FIG. 4, A represents a payment page, and the payment page comprises three display components; C in FIG. 4 represents a payment amount component; D in FIG. 4 represents a payment mode component; and F in FIG. 4 represents a payment offer component.

For example, as shown in FIG. 5, if the target display components obtained according to the above step S102 comprise a payment mode component and a payment amount component, a payment page comprising the target display components may be displayed. A in FIG. 5 represents a payment page, and the payment page comprises two display components; C in FIG. 5 represent a payment amount component; and D in FIG. 5 represents a payment mode component.

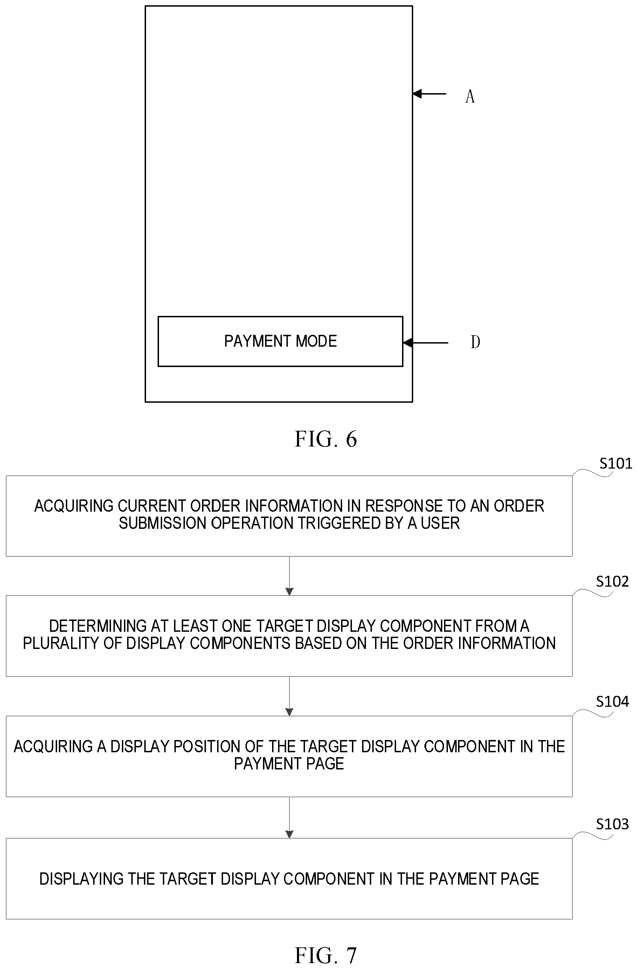

For example, as shown in FIG. 6, if the target display component obtained according to the above step S102 comprises a payment mode component, a payment page comprising the target display component may be displayed. In FIG. 6, A represents a payment page, the payment page comprises a display component, and D represents a payment mode component.

By adopting the above method, at least one target display component may be determined from a plurality of display components based on current order information, and the target display component is displayed in a payment page. In this way, at least one corresponding target display component may be determined based on the contents of different order information, thereby displaying a payment page containing the target display component corresponding to current order information. It may assist a user in completing payment, and improving the usage experience of the user. With the above method, various kinds of payment pages may be displayed based on different order information, so as to better satisfy the diversified requirements.

In addition, in this embodiment, the target display component may also be displayed in the payment page according to the display position of the target display component. Therefore, as shown in FIG. 7, the method may further include the following steps:
In step S104, acquiring a display position of the target display component in the payment page.

The display position may be a position determined based on a first predetermined priority of the target display component, or the display position may also be a position predetermined by the user. The first predetermined priority of each target display component in the display position may be the same as or different from the priority of each display component of the at least one display component determined from the plurality of display components in another possible implementation of the foregoing step S102, which is not limited in the present disclosure.

Correspondingly, the displaying the target display component in the payment page in above step S103 may comprise: displaying the target display component in the payment page based on the display position.

That is to say, in this embodiment, the determination of the display position may include the following two possible implementations:
In a possible implementation, the display position may be determined by a first predetermined priority of the target display component. The first predetermined priority may be divided, for example, according to the extent of interest of the user in the content of the plurality of display components. For example, the extent of interest of the user in the payment amount information may be greater than the that in the payment mode information, and therefore, the priority of the payment amount component may be determined to be higher than the priority of the payment mode component. A higher priority indicates that the user is more interested in the content of the display component, and a lower priority indicates that the user is less interested in the content of the display component. Then, the display positions of the target display components may be obtained according to an order of the first predetermine priority from high to low. The display positions may be sequentially arranged from top to bottom, and one display component is arranged in each row or a plurality of display components are arranged in each row, or may also be arranged in other manners, such as left-right arrangement, which is not limited in the present disclosure.

For example, taking the display component in FIG. 2 as an example for illustration, if the priority of a target information component in a first determined priority is higher than the priority of a payment amount component, the priority of the payment amount component is higher than the priority of the payment mode component, and the display positions are sequentially arranged according to a top-to-bottom order, a display component is provided in each row, then the target information component may be arranged in the first row, the payment amount component may be arranged in the second row, and the payment mode component may arranged in the third row. As shown in FIG. 2, the user may see in the current payment page that the order from top to bottom is a target information component, a payment amount component and a payment mode component. In addition, if the display positions are arranged in sequence from top to bottom, and a plurality of display components are arranged in each row, the display components with the highest priority may be arranged in a middle position in each row, and display components with lower priorities may be arranged at two sides, for example.

In another possible implementation, the display position may be a position predetermine by a user. For example, the user may determine the display position of the display component in the following two ways:
Way 1: determining a target display template from a plurality of component display templates.

For example, in response to a component setting instruction triggered by the user, displaying a component setting page, the component setting page comprising a plurality of predetermined component display templates; determining, from the plurality of component display templates, a target display template selected by the user; and taking a position corresponding to the target display component in the target display template as the display position of the target display component.

The component setting instruction may be, for example, a touch operation by a user on a component setting key. When a touch operation by the user on the component setting key is received, a component setting page is displayed, so that the user may determine a display position of a target display component based on the component setting page.

Way 2: setting the positions of the plurality of display components in combination.

For example, in response to a component setting instruction triggered by the user, a component setting page is displayed, wherein the component setting page comprises display components to be combined. A combination setting of a display positions of a plurality of display components by the user is acquired, and a position corresponding to a target display component in the set display position is used as the display position of the target display component.

In addition, in order to further improve the payment experience of the user, so that the user may more obviously see the content of interest in the payment page, the key information arranged in the target display component in the first row may be magnified. For example, as shown in FIG. 3, the payment amount component in FIG. 3 is a target display component arranged in a first row, that is, the payment amount component is the content that may be most interesting to the user in the current target display component. Therefore, the total amount displayed in the payment amount component (namely, "XXX" in FIG. 3) may be amplified, so that a user can clearly and intuitively learn a payment amount, thereby improving the usage experience of the user. At the same time, the success rate of order payment is improved indirectly.

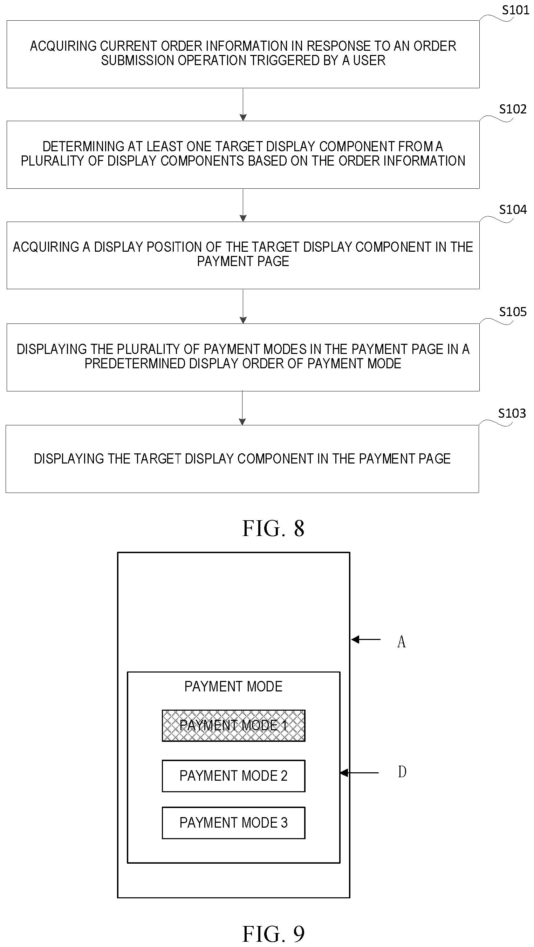

For the above example, in the case that the payment mode component includes a plurality of payment modes, as shown in FIG. 8, the method may further include the following steps:
Step S105, displaying the plurality of payment modes in the payment page in a predetermined display order of payment mode.

For example, the predetermined display order of payment mode may be determined by any of the following manners:
Manner 1: determining a display order of the plurality of payment modes based on frequencies of use of application programs corresponding to the plurality of payment modes.

For example, because a use frequency of an application program corresponding to a payment mode may reflect a payment habit of a user to some extent, based on frequencies of use of application programs corresponding to the plurality of payment modes, a payment mode with a highest frequency of use may be displayed in a first row, and remaining payment modes are arranged according to frequencies of use from high to low, so as to obtain a display order of the plurality of payment modes. For example, as shown in FIG. 9, A represents a payment page, and D represents a payment mode component. When the payment mode component includes three payment modes, if the frequence of use by a user of the three payment modes from high to low as payment mode 1, payment mode 2, and payment mode 3 respectively, then, payment mode 1 may be arranged in a first row, payment mode 2 may be arranged in a second row, and payment mode 3 may be arranged in a third row, thus the payment page in FIG. 9 is obtained.

Manner 2: determining the display order of the plurality of payment modes based on a second predetermined priority of the plurality of payment modes.

Likewise, the second predetermined priority of the plurality of payment modes may also determine the priorities of the plurality of payment modes according to the extent of interest of the user in the plurality of payment modes or the download amount of the application program corresponding to the plurality of payment modes, so that the display order of the plurality of payment modes may be arranged according to the order of the priorities from high to low.

As an example, if the payment mode component includes two payment modes, and a priority of payment mode 1 is higher than a priority of payment mode 2, the payment mode 1 may be arranged in a first row, and the payment mode 2 may be arranged in a second row.

Manner 3: determining the display order of the plurality of payment modes based on a historical order of use of the application programs corresponding to the plurality of payment modes.

It can be understood that, based on a historical order of use of the application programs corresponding to the plurality of payment modes, the payment mode corresponding to the recently used application programs may be arranged in the first row, and based on the historical order of use, the display order of the plurality of payment modes is determined according to a time order from near to far.

For example, if the payment mode component includes two payment modes, the historical order of use of the application program corresponding to the payment mode 1 follows the historical order of use of the application program corresponding to the payment mode 2, the payment mode 2 may be arranged in a first row, and the payment mode 1 may be arranged in a second row.

Manner 4: determining the display order of the plurality of payment modes based on a display order of the plurality of payment modes predetermined by a user.

For example, the user may predetermine a display order of the plurality of payment modes according to personal usage habits, so as to obtain the display order of the plurality of payment modes.

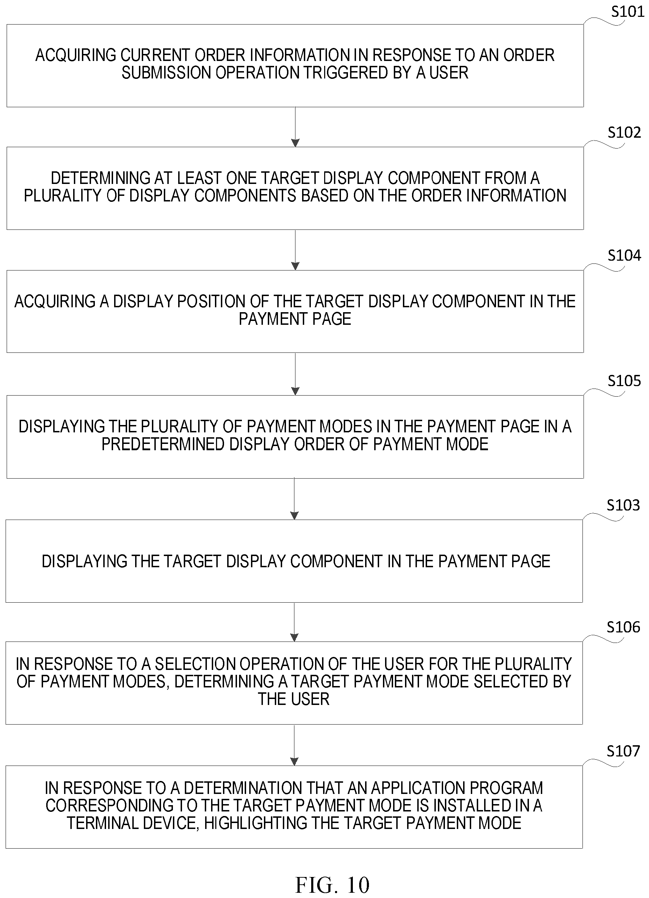

In addition, in order to further improve the payment experience of the user and facilitate the user to more obviously see the selected target payment mode, as shown in FIG. 10, the method further comprises the following steps:
Step S106, in response to a selection operation of the user for the plurality of payment modes, determining a target payment mode selected by the user.

For example, the selection operation may be a click operation, and the user may click an area where a target payment mode is located from a plurality of payment modes, to determine the target payment mode selected by the user according to the selection operation.

Step S107: in response to a determination that an application program corresponding to the target payment mode is installed in a terminal device, highlighting the target payment mode.

For example, as shown in FIG. 9, if the payment mode 1 is that a target payment mode is selected by a user from a plurality of payment modes and an application program corresponding to the target payment mode is installed in a terminal device, the payment mode 1 may be highlighted. It should be noted that, in FIG. 9, a filled pattern being a diamond filled pattern is used for representing highlighted display, that is, the payment mode is the target payment mode selected by the user. In this way, the user may more clearly and intuitively know the selected target payment mode, thereby improving the user experience.

It should be noted that, it needs to be performed in a case that the user is authorized to learn about whether an application program corresponding to the target payment mode is installed in the terminal device, thereby ensuring information security of the user.

In addition, in response to a determination that the application program corresponding to the target payment mode is not installed in the terminal device, installation prompt information may be displayed, the installation prompt information is used for prompting the user to install the application program corresponding to the target payment mode. In this way, when the user selects the target payment mode, the user may be prompted that application program corresponding to the target payment mode is not installed in the current terminal device, so that the user may change the payment mode or install the application program corresponding to the target payment mode in time.

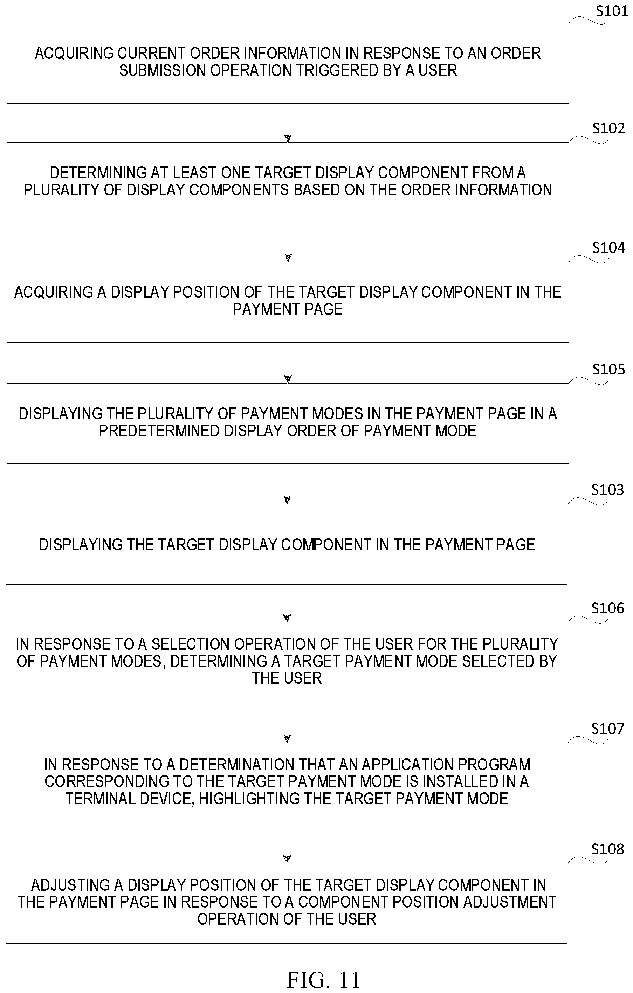

In view of the fact that the extent of satisfaction that the user may be on the order of arrangement of the target display components in the current payment page after seeing the payment page, in some embodiments, as shown in FIG. 11, the method may further include the following steps:
Step S108, adjusting a display position of the target display component in the payment page in response to a component position adjustment operation of the user.

In this way, the user may adjust the display position of the target display component in the payment page through the component position adjustment operation, so as to improve the satisfaction degree of the user on the arrangement order of the target display components in the payment page.

In a possible implementation, the component position adjustment operation may comprise a drag operation on the target display component, and the adjusting a display position of the target display component in the payment page in response to a component position adjustment operation of the user in step S108 may comprise: in response to the drag operation of the user on the target display component, taking a position of the target display component in the payment page after the drag operation is performed on the target display component as the adjusted display position of the target display component. This adjustment manner is more intuitive and flexible, and a user can immediately see an adjusted display position after a drag operation is performed, thereby bringing better payment experience to the user.

For example, the target display component included in the current payment page is a payment amount component and a payment mode component, and the payment amount component is arranged in a first row, the payment mode component is arranged in a second row. In response to the drag operation of the user on the payment mode component, a position of the payment mode component in the payment page after the drag operation is performed as the adjusted display position of the target display component.

In another possible implementation, the component position adjustment operation further includes triggering a component adjustment instruction. In step S108, adjusting a display position of the target display component in the payment page in response to a component position adjustment operation of the user may comprise: in response to the component adjustment instruction triggered by the user, displaying a component adjustment page, wherein the component adjustment page comprises a plurality of predetermined component display templates; determining a target display template selected by the user from a plurality of component display templates; and taking a position corresponding to the target display component in the target display template as a display position adjusted by the target display component. This adjustment manner is relatively simple to operate, and a user only needs to determine a target display template from a plurality of predetermined component display templates without performing other touch control operations, thereby being able to bring better payment experience to the user.

For example, the component adjustment instruction may be, for example, a predetermined gesture operation and/or a touch operation on a specified button displayed on the payment page. For example, if it is detected that a user continuously touches a pattern constituting "Z" on a current interface, the component adjustment instruction triggered by the user may be determined, and a component adjustment page is displayed, and the user may determine a target display template from a plurality of component display templates; taking the position corresponding to the target display component in the target display template as the adjusted display position of the target display component.

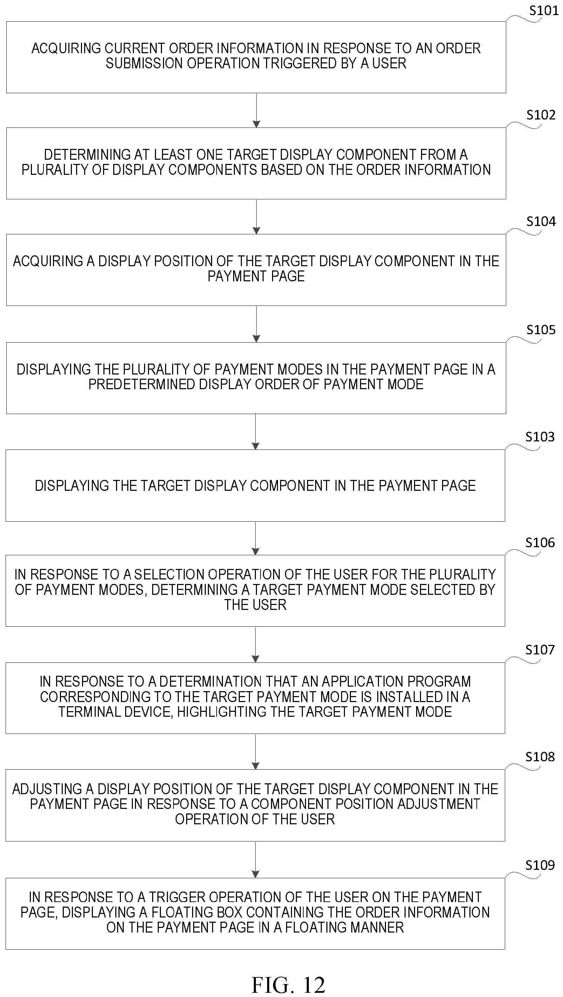

In a practical application process, a user may need to confirm order information again before payment. Therefore, in order to facilitate the user to view order information, as shown in FIG. 12, the method may further include the following step:
Step S109, in response to a trigger operation of the user on the payment page, displaying a floating box containing the order information on the payment page in a floating manner.

The size of the floating box is smaller than the size of the payment page, and meanwhile, the user may drag the floating box. The trigger operation may for example comprise a predetermined gesture operation or a touch operation on a specified button displayed in the payment page. The predetermined gesture operation may be, for example, a long-press operation or a double-click operation, and the touch operation on a specified button may be, for example, a click operation or a hold-and-drag operation on the specified button. In this way, when the user needs to view the order information, the user may view order information by performing a trigger operation on the payment page without exiting the payment page. Furthermore, the order information is displayed in the form of a floating box, which is movable, that is, the user may conveniently adjust the position of the floating box.

In addition, a floating box containing order information may also be displayed on the payment page according to a predetermined animation effect. For example, the predetermined animation effect may include sliding in from right to left, then the floating box containing the order information may slide from right to left into the payment page, thereby bringing better sensory experience to the user. Meanwhile, in the process that the floating box containing the order information may slide into the payment page from right to left, the payment page may also be blurred, so that the user can intuitively and clearly see the order information. In this way, the floating box containing the order information may be displayed on the payment page according to the predetermined animation effect, thereby increasing diversity of a display manner of the floating box containing the order information.

With the above method, at least one target display component can be determined from a plurality of display components based on current order information, and the target display component is displayed in a payment page. In this way, at least one corresponding target display component can be determined according to the contents of different order information, thereby displaying a payment page containing the target display component corresponding to current order information, assisting a user in completing payment, and improving the usage experience of the user. Furthermore, by the above method, various payment pages can be displayed according to different order information, so as to better satisfy the diversified requirements.

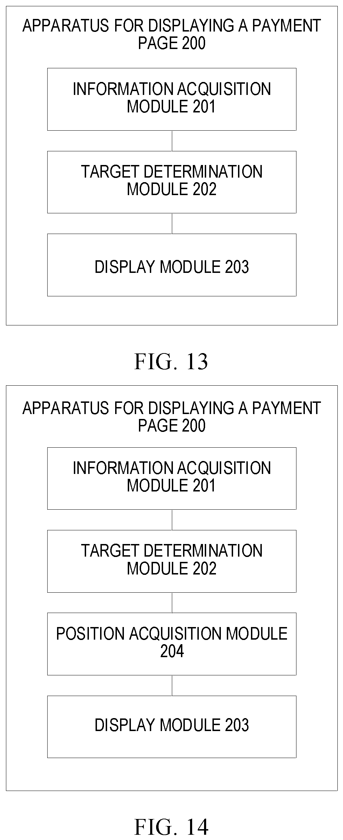

FIG. 13 shows an apparatus for displaying a payment page according to an example embodiment. As shown in FIG. 13, the apparatus 200 includes:
an information acquisition module 201, configured to acquire current order information in response to an order submission operation triggered by a user;
a target determination module 202, configured to determine at least one target display component from a plurality of display components based on the order information; and
**a** display module 203, configured to display the target display component in the payment page to display payment information corresponding to the order information through the target display component.

Optionally, the plurality of display components comprise a payment mode component, a target information component, a time component, a payment offer component, and a payment amount component.

Optionally, the at least one target display component comprises a payment mode component.

Optionally, the target determination module 202 is configured for determining, based on the order information, the at least one target display component from the plurality of display components by a predetermined component correspondence, wherein the predetermined component correspondence comprises a correspondence between at least one order information and the display components.

Optionally, the predetermined component correspondence comprises one or more of the following: in response to the order information comprising target information, the at least one target display component comprises a target information component; in response to the order information having a payment time limit, the at least one target display component comprises a time component, the time component being configured to display information about the payment time limit; in response to the order information satisfying a payment offer, the at least one target display component comprises a payment offer component; and in response to the order information comprising a payment amount, the at least one target display component comprises a payment amount component.

Optionally, the predetermined component correspondence comprises one or more of the following: in response to the order information comprising target information and conforming to a display condition of target information, the at least one target display component corresponding to the order information comprises a target information component; in response to the order information comprising the target information but not confirming to the display condition of target information, the at least one target display component corresponding to the order information does not comprise the target information component; in response to the order information having a payment time limit and conforming to a display condition of payment time limit, the at least one target display component comprises a time component, the time component being configured to display information about the payment time limit; in response to the order information having the payment time limit but not conforming to the display condition of payment time, the at least one target display component does not comprise the time component; in response to the order information satisfying a payment offer and conforming to a display condition of payment offer, the at least one target display component comprises a payment offer component; in response to the order information satisfying the payment offer but not conforming to the display condition of payment offer, the at least one target display component does not comprise the payment offer component; in response to the order information comprising a payment amount and conforming to a display condition of payment amount, the at least one target display component comprises a payment amount component; and in response to the order information comprising the payment amount but not conforming to the display condition of payment amount, the at least one target display component does not comprise the payment amount component.

Optionally, the target determination module 202 is configured for setting a priority for each of the plurality of display components, and determining the at least one target display component from the plurality of display components based on the number of the display components and the priority of the display components.

Optionally, as shown in FIG. 14, the apparatus 200 further comprises:
a position acquisition module 202 configured for acquiring a display position of the target display component in the payment page, the display position being a position determined based on a first predetermined priority of the target display component, or the display position being a position predetermined by the user;
a display module 203 configured for displaying the target display component in the payment page based on the display position.

Optionally, the display position is set by: in response to a component setting instruction triggered by the user, displaying a component setting page, the component setting page comprising a plurality of predetermined component display templates; determining, from the plurality of component display templates, a target display template selected by the user; and
taking a position corresponding to the target display component in the target display template as the display position of the target display component.

Optionally, the payment mode component comprises a plurality of payment modes, the display module 203 is further configured for displaying the plurality of payment modes in the payment page in a predetermined display order of payment mode.

Optionally, the predetermined display order of payment mode is determined by:
determining a display order of the plurality of payment modes based on frequencies of use of application programs corresponding to the plurality of payment modes; or
determining the display order of the plurality of payment modes based on a second predetermined priority of the plurality of payment modes; or
determining the display order of the plurality of payment modes based on a historical order of use of the application programs corresponding to the plurality of payment modes; or
determining the display order of the plurality of payment modes based on a display order of the plurality of payment modes predetermined by a user.

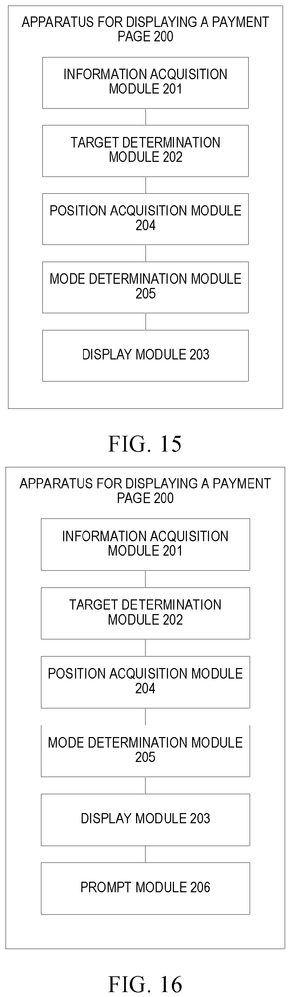

Optionally, as shown in FIG. 15, the apparatus 200 further comprises:
a mode determination module 205 configured for, in response to a selection operation of the user for the plurality of payment modes, determining a target payment mode selected by the user;
the display module 203 further configured for, in response to a determination that an application program corresponding to the target payment mode is installed in a terminal device, highlighting the target payment mode.

Optionally, as shown in FIG. 16, the apparatus 200 further comprises:
a prompt module 206 configured for, in response to a determination that the application program corresponding to the target payment mode is not installed in the terminal device, displaying installation prompt information, the installation prompt information being used for prompting the user to install the application program corresponding to the target payment mode.

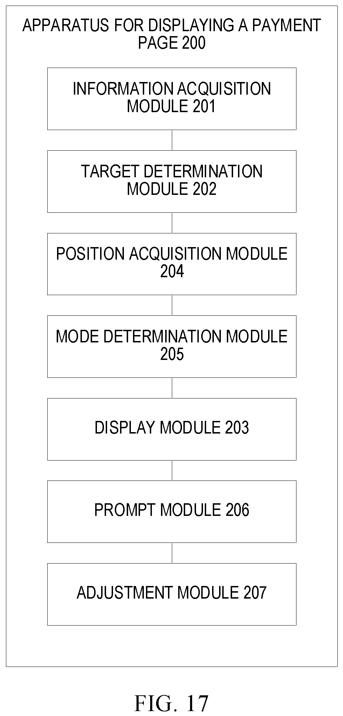

Optionally, as shown in FIG. 17, the apparatus 200 further comprises:
an adjustment module 207 configured for adjusting a display position of the target display component in the payment page in response to a component position adjustment operation of the user.

Optionally, the component position adjustment operation comprises a drag operation on the target display component, and the adjustment module 207 is configured for, in response to the drag operation of the user on the target display component, taking a position of the target display component in the payment page after the drag operation is performed on the target display component as the adjusted display position of the target display component.

Optionally, the display position is set by:
in response to a component setting instruction triggered by the user, displaying a component setting page, the component setting page comprising a plurality of predetermined component display templates;
determining, from the plurality of component display templates, a target display template selected by the user; and
taking a position corresponding to the target display component in the target display template as the display position of the target display component.

Optionally, the display module 203 is further configured for, in response to a trigger operation of the user on the payment page, displaying a floating box containing the order information on the payment page in a floating manner; wherein the trigger operation comprises a predetermined gesture operation or a touch operation on a specified button displayed in the payment page.

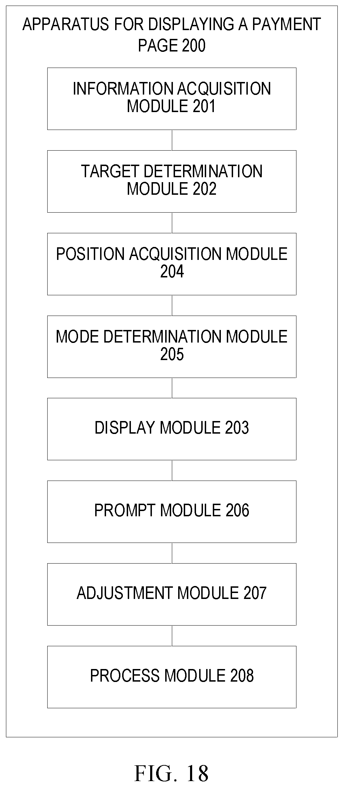

Optionally, as shown in FIG. 18, the apparatus 200 further comprises:
a process module 208 configured for performing a blurring processing on the payment page.

By adopting above apparatus, at least one target display component can be determined from a plurality of display components according to current order information, and the target display component is displayed in a payment page. In this way, at least one corresponding target display component can be determined according to the contents of different order information, thereby displaying a payment page containing the target display component corresponding to current order information, assisting a user in completing payment, and improving the usage experience of the user. Furthermore, with the above method, various payment pages can be displayed according to different order information, so as to better satisfy the diversified requirements.

With respect to the apparatus in the foregoing embodiments, the specific manner in which the modules execute the operations has been described in detail in the embodiments of the method, and is not described in detail herein.

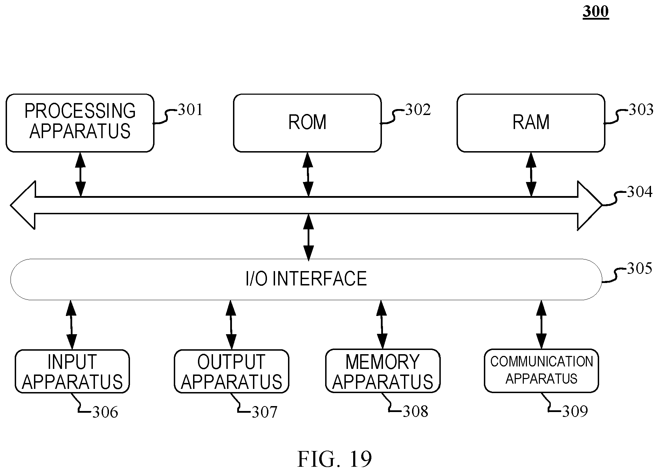

Referring now to FIG. 19, it shows a block diagram of an electronic device (e.g., a terminal device) 300 suitable for implementing embodiments of the present disclosure. The terminal device in this disclosure may include, but is not limited to, a mobile terminal such as a mobile phone, a notebook computer, a digital broadcast receiver, a personal digital assistant (PDA), a portable android device (PAD), a portable multimedia player (PMP), a vehicle-mounted terminal (for example, a vehicle-mounted navigation terminal), and the like, and a fixed terminal such as a digital TV, a desktop computer, and the like. The electronic device shown in FIG. 19 is merely an example and should not bring any limitation to the functions and scope of use of the embodiments of the present disclosure.

As shown in FIG. 19, the electronic device 300 may include processing apparatus (e.g., central processing unit, graphics processing unit, etc.) 301 that may perform various suitable actions and processes in accordance with a program stored in read only memory (ROM) 302 or a program loaded into random access memory (RAM) 303 from memory apparatus 308. In the RAM 303, various programs and data necessary for the operation of the electronic device 300 are also stored. The processing apparatus 301, the ROM 302, and the RAM 303 are connected to each other via a bus 304. An input/output (I/O) interface 305 is also connected to the bus 304.

In general, the following apparatus may be connected to the I/O interface 305: an input apparatus 306 including, for example, a touch screen, a touch pad, a keyboard, a mouse, a camera, a microphone, an accelerometer, a gyroscope, or the like; an output apparatus 307 including, for example, a liquid crystal display (LCD), a speaker, a vibrator, or the like; a memory apparatus 308 including, for example, a magnetic tape, a hard disk, or the like; and a communication apparatus 309. The communication apparatus 309 may allow electronic device 300 to communicate wirelessly or wired with other devices to exchange data. While FIG. 19 illustrates an electronic device 930 with a variety of component, it should be understood that it is not required that all of the illustrated components be implemented or provided. More or fewer components may alternatively be implemented or provided.

In particular, the processes described above with reference to the flowcharts may be implemented as computer software programs in accordance with embodiments of the present disclosure. For example, embodiments of the present disclosure include a computer program product comprising a computer program carried on a computer readable medium. The computer program comprises a program code for executing the method as shown in the flowchart. In such an embodiment, the computer program may be downloaded and installed from the network via communications apparatus 309, or installed from memory apparatus 308, or installed from ROM 302. When the computer program is executed by the processing apparatus 301, the above-described functions defined in the method of embodiments of the present disclosure are executed.

It should be noted that the computer readable medium in the present disclosure may be a computer readable signal medium or a computer readable storage medium, or any combination thereof. A computer readable storage medium may be, for example, but not limited to, an electronic, magnetic, optical, electromagnetic, infrared, or semiconductor system, apparatus, or device, or any suitable combination of the foregoing. More specific examples of the computer readable storage medium may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the present disclosure, a computer readable storage medium may be any tangible medium that can contain or store a program for use by or in connection with an instruction execution system, apparatus, or device. While in the present disclosure, a computer readable signal medium may include a propagated data signal with computer readable program code embodied therein, for example, in baseband or as part of a carrier wave. Such a propagated signal may take any of a variety of forms, including, but not limited to, electro-magnetic signal, optical signal, or any suitable combination thereof. A computer readable signal medium may also be any computer readable medium that is not a computer readable storage medium and that can sent, propagate, or transport a program for use by or in connection with an instruction execution system, apparatus, or device. Program code embodied on a computer readable medium may be transmitted using any appropriate medium, including, but not limited to, wireline, optical fiber cable, RF (radio frequency), etc., or any suitable combination of the foregoing.

In some implementations, clients may communicate using any currently known or future developed network protocol such as HTTP (Hypertext Transfer Protocol) and may be interconnected with digital data communication (e.g., a communication network) in any form or medium. Examples of communication networks include a local area network ("LAN"), a wide area network ("WAN"), an internetwork (e.g., the Internet), and a peer-to-peer network (e.g., an ad hoc peer-to-peer network), as well as any currently known or future developed network.

The computer readable medium may be included in the electronic device, or may exist separately and not be installed in the electronic device.

The computer readable medium carries one or more programs, and when the one or more programs are executed by the electronic device, the electronic device is enabled to: acquire current order information in response to an order submission operation triggered by a user; determine at least one target display component from a plurality of display components based on the order information; and when a predetermined display position by user is acquired, display the target display component in the payment page according to the display position, to display payment information corresponding to the order information through the target display component, wherein the display position is a position of the target display component to be displayed in the payment page to be displayed.

Computer program code for carrying out operations for aspects of the present disclosure may be written in any combination of one or more programming languages, including an object oriented programming language such as Java, Smalltalk, C++ or the like and conventional procedural programming languages, such as the 'C' programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The flowchart and block diagrams in the Figures illustrate the architecture, functionality, and operation of possible implementations of systems, methods and computer program products according to various embodiments of the present disclosure. In this regard, each block in the flowchart or block diagrams may represent a module, a program segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart, and combinations of blocks in the block diagrams and/or flowchart, can be implemented by special purpose hardware-based systems that perform the specified functions or acts, or combinations of special purpose hardware and computer instructions.

The modules involved in the embodiments of the present disclosure may be implemented through software or hardware. The name of a module does not constitute a limitation to the module itself in some cases.

The functions described herein above may be performed, at least in part, by one or more hardware logic components. For example, without limitation, exemplary types of hardware logic components that can be used include Field-programmable Gate Arrays (FPGAs), Program-specific Integrated Circuits (ASICs), Application-specific Standard Products (ASSPs), System-on-a-chip systems (SOCs), Complex Programmable Logic Devices (CPLDs), etc.

In the context of this disclosure, a machine-readable medium may be tangible media that may contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of machine-readable storage media include an electrical connection based on one or more wires, a portable computer diskette, a hard disk, a random access memory (RAM), a read-only memory (ROM), an erasable programmable read-only memory (EPROM or Flash memory), an optical fiber, a compact disc read-only memory (CD-ROM), an optical storage device, a magnetic storage device, or any suitable combination of the foregoing.

According to one or more embodiments of the present disclosure, Example 1 provides a method for displaying a payment page, wherein the method comprises: acquiring current order information in response to an order submission operation triggered by a user; determining at least one target display component from a plurality of display components based on the order information; and displaying the target display component in the payment page to display payment information corresponding to the order information through the target display component.

According to one or more embodiments of the present disclosure, Example 2 provides the method of Example 1, the plurality of display components comprise a payment mode component, a target information component, a time component, a payment offer component, and a payment amount component.

According to one or more embodiments of the present disclosure, Example 3 provides the method of Example 1, the at least one target display component comprises a payment mode component.

According to one or more embodiments of the present disclosure, Example 4 provides the method of Example 1 or Example 3, the determining at least one target display component from a plurality of display components based on the order information comprises: determining, based on the order information, the at least one target display component from the plurality of display components by a predetermined component correspondence, wherein the predetermined component correspondence comprises a correspondence between at least one order information and the display components.

According to one or more embodiments of the present disclosure, Example 5 provides the method of Example 4, the predetermined component correspondence comprises one or more of the following: in response to the order information comprising target information, the at least one target display component comprises a target information component; in response to the order information having a payment time limit, the at least one target display component comprises a time component, the time component being configured to display information about the payment time limit; in response to the order information satisfying a payment offer, the at least one target display component comprises a payment offer component; and in response to the order information comprising a payment amount, the at least one target display component comprises a payment amount component.

According to one or more embodiments of the present disclosure, Example 6 provides the method of Example 4, the predetermined component correspondence comprises one or more of the following: in response to the order information comprising target information and conforming to a display condition of target information, the at least one target display component corresponding to the order information comprises a target information component; in response to the order information comprising the target information but not confirming to the display condition of target information, the at least one target display component corresponding to the order information does not comprise the target information component; in response to the order information having a payment time limit and conforming to a display condition of payment time limit, the at least one target display component comprises a time component, the time component being configured to display information about the payment time limit; in response to the order information having the payment time limit but not conforming to the display condition of payment time, the at least one target display component does not comprise the time component; in response to the order information satisfying a payment offer and conforming to a display condition of payment offer, the at least one target display component comprises a payment offer component; in response to the order information satisfying the payment offer but not conforming to the display condition of payment offer, the at least one target display component does not comprise the payment offer component; in response to the order information comprising a payment amount and conforming to a display condition of payment amount, the at least one target display component comprises a payment amount component; and in response to the order information comprising the payment amount but not conforming to the display condition of payment amount, the at least one target display component does not comprise the payment amount component.

According to one or more embodiments of the present disclosure, Example 7 provides the method of Example 4, the method further comprises: setting a priority for each of the plurality of display components, and determining the at least one target display component from the plurality of display components based on the number of the display components and the priority of the display components.

According to one or more embodiments of the present disclosure, Example 8 provides the method of Example 1, the method further comprises: acquiring a display position of the target display component in the payment page, the display position being a position determined based on a first predetermined priority of the target display component, or the display position being a position predetermined by the user; the displaying the target display component in the payment page comprises: displaying the target display component in the payment page based on the display position.

According to one or more embodiments of the present disclosure, Example 9 provides the method of Example 8, the display position is set by: in response to a component setting instruction triggered by the user, displaying a component setting page, the component setting page comprising a plurality of predetermined component display templates; determining, from the plurality of component display templates, a target display template selected by the user; and taking a position corresponding to the target display component in the target display template as the display position of the target display component.

According to one or more embodiments of the present disclosure, Example 10 provides the method of Example 3, the payment mode component comprises a plurality of payment modes, and the method further comprises: displaying the plurality of payment modes in the payment page in a predetermined display order of payment mode.

According to one or more embodiments of the present disclosure, Example 11 provides the method of Example 10, the predetermined display order of payment mode is determined by: determining a display order of the plurality of payment modes based on frequencies of use of application programs corresponding to the plurality of payment modes; or determining the display order of the plurality of payment modes based on a second predetermined priority of the plurality of payment modes; or determining the display order of the plurality of payment modes based on a historical order of use of the application programs corresponding to the plurality of payment modes; or determining the display order of the plurality of payment modes based on a display order of the plurality of payment modes predetermined by a user.

According to one or more embodiments of the present disclosure, Example 12 provides the method of Example 10, the method further comprises: in response to a selection operation of the user for the plurality of payment modes, determining a target payment mode selected by the user; in response to a determination that an application program corresponding to the target payment mode is installed in a terminal device, highlighting the target payment mode.

According to one or more embodiments of the present disclosure, Example 13 provides the method of Example 12, the method further comprises: in response to a determination that the application program corresponding to the target payment mode is not installed in the terminal device, displaying installation prompt information, the installation prompt information being used for prompting the user to install the application program corresponding to the target payment mode.

According to one or more embodiments of the present disclosure, Example 15 provides the method of Example 1, the method further comprises: adjusting a display position of the target display component in the payment page in response to a component position adjustment operation of the user.

According to one or more embodiments of the present disclosure, Example 15 provides the method of Example 14, the component position adjustment operation comprises a drag operation on the target display component, and the adjusting a display position of the target display component in the payment page in response to a component position adjustment operation of the user comprises: in response to the drag operation of the user on the target display component, taking a position of the target display component in the payment page after the drag operation is performed on the target display component as the adjusted display position of the target display component.

According to one or more embodiments of the present disclosure, Example 16 provides the method of Example 1, the method further comprises: in response to a trigger operation of the user on the payment page, displaying a floating box containing the order information on the payment page in a floating manner; wherein the trigger operation comprises a predetermined gesture operation or a touch operation on a specified button displayed in the payment page.

According to one or more embodiments of the present disclosure, Example 17 provides the method of Example 16, the method further comprises: performing a blurring processing on the payment page.

According to one or more embodiments of the present disclosure, Example 18 provides an apparatus for displaying a payment page, wherein the apparatus comprises: an information acquisition module, configured to acquire current order information in response to an order submission operation triggered by a user; a target determination module, configured to determine at least one target display component from a plurality of display components based on the order information; and a display module, configured to display the target display component in the payment page to display payment information corresponding to the order information through the target display component.

According to one or more embodiments of the present disclosure, Example 19 provides a computer readable medium having a computer program stored thereon, wherein the program, when executed by a processing apparatus, carries out steps of the method of any of Example 1 to 17.

According to one or more embodiments of the present disclosure, Example 20 provides an electronic device, comprising: a memory apparatus having a computer program stored thereon; and a processing apparatus configured to execute the computer program in the memory apparatus, to carry out steps of the method of any of Example 1 to 17.

The foregoing description is merely illustrative of the preferred embodiments of the present disclosure and of the technical principles applied thereto. As will be appreciated by those skilled in the art, the disclosure of the present disclosure is not limited to the technical solution formed by the specific combination of the described technical features, it should also cover other technical solutions formed by any combination of the described technical features or equivalent features thereof without departing from the described disclosed concept. For example, the above features and technical features having similar functions disclosed in the present disclosure (but not limited thereto) are replaced with each other to form a technical solution.

In addition, while operations are depicted in a particular order, this should not be understood as requiring that the operations be performed in the particular order shown or in sequential order. Multitasking and parallel processing may be advantageous in certain circumstances. Likewise, while several specific implementation details are included in the above discussion, these should not be construed as limiting the scope of the present disclosure. Certain features that are described in the context of separate embodiments can also be implemented in combination in a single embodiment. Conversely, various features that are described in the context of a single embodiment can also be implemented in multiple embodiments separately or in any suitable sub-combination.

Although the subject matter has been described in language specific to structural features and/or methodological acts, it is to be understood that the subject matter defined in the appended claims is not necessarily limited to the specific features or acts described above. Rather, the specific features and acts described above are merely exemplary forms of implementing the claims. With respect to the apparatus in the foregoing embodiments, the specific manner in which the modules execute the operations has been described in detail in the embodiments of the method, and is not described in detail herein.

## Claims

1. A method for displaying a payment page, wherein the method comprises:
acquiring current order information in response to an order submission operation triggered by a user;
determining at least one target display component from a plurality of display components based on the order information; and
displaying the target display component in the payment page to display payment information corresponding to the order information through the target display component.

2. The method of claim 1, wherein the plurality of display components comprise a payment mode component, a target information component, a time component, a payment offer component, and a payment amount component.

3. The method of claim 1, wherein the at least one target display component comprises a payment mode component.

4. The method of any of claims 1 to 3, wherein the determining at least one target display component from a plurality of display components based on the order information comprises:
determining, based on the order information, the at least one target display component from the plurality of display components by a predetermined component correspondence, wherein the predetermined component correspondence comprises a correspondence between at least one order information and the display components.

5. The method of claim 4, wherein the predetermined component correspondence comprises one or more of the following:
in response to the order information comprising target information, the at least one target display component comprises a target information component;
in response to the order information having a payment time limit, the at least one target display component comprises a time component, the time component being configured to display information about the payment time limit;
in response to the order information satisfying a payment offer, the at least one target display component comprises a payment offer component; and
in response to the order information comprising a payment amount, the at least one target display component comprises a payment amount component.

6. The method of claim 4, wherein the predetermined component correspondence comprises one or more of the following:
in response to the order information comprising target information and conforming to a display condition of target information, the at least one target display component corresponding to the order information comprises a target information component;
in response to the order information comprising the target information but not confirming to the display condition of target information, the at least one target display component corresponding to the order information does not comprise the target information component;
in response to the order information having a payment time limit and conforming to a display condition of payment time limit, the at least one target display component comprises a time component, the time component being configured to display information about the payment time limit;
in response to the order information having the payment time limit but not conforming to the display condition of payment time, the at least one target display component does not comprise the time component;
in response to the order information satisfying a payment offer and conforming to a display condition of payment offer, the at least one target display component comprises a payment offer component;
in response to the order information satisfying the payment offer but not conforming to the display condition of payment offer, the at least one target display component does not comprise the payment offer component;
in response to the order information comprising a payment amount and conforming to a display condition of payment amount, the at least one target display component comprises a payment amount component; and
in response to the order information comprising the payment amount but not conforming to the display condition of payment amount, the at least one target display component does not comprise the payment amount component.

7. The method of any of claims 1 to 6, wherein the method further comprises:
setting a priority for each of the plurality of display components, and determining the at least one target display component from the plurality of display components based on the number of the display components and the priority of the display components.

8. The method of any of claims 1 to 7, wherein the method further comprises:
acquiring a display position of the target display component in the payment page, the display position being a position determined based on a first predetermined priority of the target display component, or the display position being a position predetermined by the user;
the displaying the target display component in the payment page comprises:
displaying the target display component in the payment page based on the display position.

9. The method of claim 8, wherein the display position is set by:
in response to a component setting instruction triggered by the user, displaying a component setting page, the component setting page comprising a plurality of predetermined component display templates;
determining, from the plurality of component display templates, a target display template selected by the user; and
taking a position corresponding to the target display component in the target display template as the display position of the target display component.

10. The method of claim 3, wherein the payment mode component comprises a plurality of payment modes, and the method further comprises:
displaying the plurality of payment modes in the payment page in a predetermined display order of payment mode.

11. The method of claim 10, wherein the predetermined display order of payment mode is determined by:
determining a display order of the plurality of payment modes based on frequencies of use of application programs corresponding to the plurality of payment modes; or
determining the display order of the plurality of payment modes based on a second predetermined priority of the plurality of payment modes; or
determining the display order of the plurality of payment modes based on a historical order of use of the application programs corresponding to the plurality of payment modes; or
determining the display order of the plurality of payment modes based on a display order of the plurality of payment modes predetermined by a user.

12. The method of claim 10 or 11, wherein the method further comprises:
in response to a selection operation of the user for the plurality of payment modes, determining a target payment mode selected by the user;
in response to a determination that an application program corresponding to the target payment mode is installed in a terminal device, highlighting the target payment mode.

13. The method of claim 12, wherein the method further comprises:
in response to a determination that the application program corresponding to the target payment mode is not installed in the terminal device, displaying installation prompt information, the installation prompt information being used for prompting the user to install the application program corresponding to the target payment mode.

14. The method of any of claims 1 to 13, wherein the method further comprises:
adjusting a display position of the target display component in the payment page in response to a component position adjustment operation of the user.

15. The method of claim 14, wherein the component position adjustment operation comprises a drag operation on the target display component, and the adjusting a display position of the target display component in the payment page in response to a component position adjustment operation of the user comprises:
in response to the drag operation of the user on the target display component, taking a position of the target display component in the payment page after the drag operation is performed on the target display component as the adjusted display position of the target display component.

16. The method of any of claims 1 to 15, wherein the method further comprises:
in response to a trigger operation of the user on the payment page, displaying a floating box containing the order information on the payment page in a floating manner; wherein the trigger operation comprises a predetermined gesture operation or a touch operation on a specified button displayed in the payment page.

17. The method of any of claims 1 to 16, wherein the method further comprises:
performing a blurring processing on the payment page.

18. An apparatus for displaying a payment page, wherein the apparatus comprises:
an information acquisition module, configured to acquire current order information in response to an order submission operation triggered by a user;
a target determination module, configured to determine at least one target display component from a plurality of display components based on the order information; and
a display module, configured to display the target display component in the payment page to display payment information corresponding to the order information through the target display component.

19. A computer readable medium having a computer program stored thereon, wherein the program, when executed by a processing apparatus, carries out steps of the method of any of claims 1 to 17.

20. An electronic device, comprising:
a memory apparatus having a computer program stored thereon; and
a processing apparatus configured to execute the computer program in the memory apparatus, to carry out steps of the method of any of claims 1 to 17.

21. A computer program product, wherein the computer program product carries a program code comprising instructions, which are configured to perform steps of the method of any of claims 1 to 17.

22. A computer program, wherein the computer program, when executed by a processor, carries out steps of the method of any of claims 1 to 17.
